# EUROPEAN PATENT SPECIFICATION

(11) **EP 0 744 383 B1**
(45) Date of publication and mention of the grant of the patent: **08.09.1999**
(21) Application number: 95107761.9
(22) Date of filing: 22.05.1995
(51) Int. Cl.: C03B 37/014

(54) **Method for drying and sintering an optical fiber preform**
Verfahren zum Trocknen und Sintern einer Vorform für optische Fasern
Procédé de séchage et frittage d'une préforme pour fibres optiques

(43) Date of publication of application: 27.11.1996
(73) Proprietor: CORNING INCORPORATED, Corning, N.Y. 14831 (US)
(72) Inventor: Willingham, Thomas Charles, Corning, NY 14831 (US)
(74) Representative: Boon, Graham Anthony

(56) References cited:
- EP-A- 0 100 174
- EP-A- 0 523 692
- EP-A- 0 613 866
- US-A- 4 906 268
- US-A- 5 318 611
- PATENT ABSTRACTS OF JAPAN vol. 014 no. 412 (C-0755) ,6 September 1990 & JP-A-02 157132 (TOSOH CORP) 15 June 1990,

## Description

### Background of the Invention

This invention relates to a method for drying and sintering a porous optical fiber preform.

In the process of manufacturing optical fibers, preforms can be produced by various methods including outside vapor deposition (OVD) and vapor axial deposition (VAD). Porous preforms produced by both of these techniques are formed of glass soot or particles and must be consolidated, i.e. dried and sintered.

The present invention will be discussed in connection with the consolidation of preforms formed by the following OVD process. A core cane is formed by depositing glass soot on a mandrel by a technique such as that disclosed in U.S. patent No. 4,486,212. The porous core preform can contain a layer of cladding glass soot, or it can comprise only core glass. The mandrel is removed, and the porous core preform is consolidated to form a core cane that is optionally stretched and severed into a plurality of pieces. A length of core cane is employed as a mandrel upon which cladding soot is deposited. The resultant hybrid porous preform, which comprises a solid core surrounded by a porous cladding region, is dried and consolidated to produce a substantially clear draw blank from which the optical fiber is drawn.

As the use of optical waveguide fiber has become more widespread, efforts have been directed toward producing fiber in larger quantities and at lower costs. The cost of optical fiber can be reduced by producing more fiber or fiber preforms per unit time from a given piece of equipment. The consolidation rate can be increased by increasing the size of the preform and/or by modifying the time-temperature schedule of the preform drying/sintering process.

Furnace 10 of Fig. 1 is a scanning consolidation furnace of the type disclosed in U.S. patent No. 4,906,268 (Lane et al.). This type of furnace was designed for consolidating large porous glass preforms. Whereas some consolidation furnaces have different zones for the different process phases, necessitating a muffle length on the order of 3-4 times the length of the processed preform, the scanning consolidation furnace employs a muffle having a length less than twice that of the preform. When lowered into furnace 10, preform 11 sits in chamber 13 defined by cylindrical muffle 12 which is made of silica, alumina, graphite or the like. Surrounding muffle 12 is a graphite susceptor 14 that is inductively heated during use by induction heating coil 15 which is capable of traversing the length of susceptor 14 as indicated by arrow 16. Furnace 10 is also heated by upper and lower end heaters 19 and 20, respectively. End heaters 19 and 20, preferably graphite resistance heaters, are used to compensate for end losses from the top and bottom of furnace 10.

Temperature feedback can be achieved through the use of pyrometers 21 and 22 that indicate the temperature of the susceptor in the vicinity of coil 15 and thermocouples 23 and 24 located at the top and bottom ends of the furnace. A microprocessor (not shown) is used to control the amount of power delivered to coil 15 and end heaters 19 and 20. The microprocessor receives the outputs of the thermocouples and the pyrometers, and based on those values, adjusts the power delivered to the coil and end heaters so that the desired temperature profile is achieved within chamber 13. The microprocessor also controls the introduction of processing gases, e.g., nitrogen, helium, oxygen and chlorine, into chamber 13 as indicated by arrow 17. The processing gases are supplied to chamber 13 at a pressure and flow rate sufficient to maintain the chamber at a pressure above atmospheric pressure.

The process can also be controlled by controlling the power applied to the coil and end heaters in accordance with a predetermined power schedule which has been empirically determined to provide that furnace temperature profile which is required for drying and sintering a porous preform. To check the accuracy of the furnace temperature profile schedule, a thermocouple array is inserted into the furnace in the place of a porous preform. The power applied to the coil and end heaters is varied in a predetermined manner and the temperatures at different axial locations in the furnace are recorded. Adjustments are made to the power schedule when there are deviations in temperature profiles from predetermined values as the power is varied. The adjusted power schedule thereafter provides the desired furnace temperature profile for each of the phases of the consolidation process. This check can be performed at predetermined intervals or when there is an indication in the subsequently performed draw process or in the optical characteristics of the resultant optical fibers that the consolidation process is in need of tuning.

Furnace 10 can generate different temperature profiles along the longitudinal axis of susceptor 14. An essentially isothermal profile can be generated by oscillating the coil over the total length of the furnace. As used herein, the term "isothermal" means that the furnace temperature along the axis of the preform does not vary more than about 50°C throughout the length of the preform. A local hot zone can be generated by causing the coil to remain at a given longitudinal position. The local hot zone can be moved along the furnace axis by traversing the coil along the furnace axis.

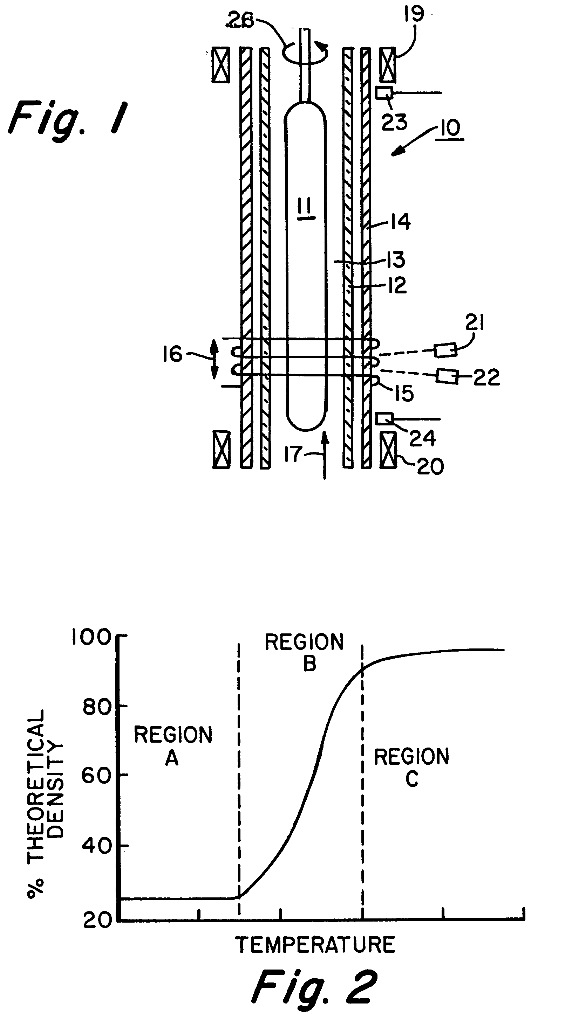

Silica based soot preforms have characteristic densification curves. Defining that curve will aid in the understanding of the consolidation process described below in connection with the Lane et al. patent. If a porous preform is placed in a furnace having a gradient temperature profile, portions of the preform will sinter at different rates depending upon the temperature to which that portion is subjected. Key characteristics of the densification are as follows, reference being made to Fig. 2.

When the preform is heated to temperatures in region A, referred to as the "Pre-Sintering Stage" of consolidation, little densification occurs. While preforms are subjected to temperatures in this region, little shrinkage occurs, and the porous preform remains essentially sooty.

Rapid densification of the preform occurs when it is heated to temperatures in region B, which is referred to as the "Densification Stage" of consolidation. While preforms are subjected to temperatures in this region, they become essentially fully densified but appear completely opaque.

Region C is referred to as the "Clarification Stage" of consolidation. A preform that had been in the Densification Stage and which is opaque in appearance will become completely clear when heated to a temperature in region C.

No temperatures are given in Fig. 2 since the temperature ranges for regions A, B and C are dependent upon preform composition, initial density, and the time during which the preform is subjected to the elevated temperature.

The Lane et al. patent discloses a ten phase process for consolidating porous optical fiber preforms, including idle, heat-up, hold and the like. However, the two main functions that are performed are "dry" and "scan/sinter". During the dry phase the furnace is maintained in an isothermal condition at drying temperature so that OH ions and water can be removed from the entire length of the preform. Continual oscillation of the induction coil across the preform at a relatively constant speed is used to maintain the isothermal condition. In all of the phases prior to the sinter phases, the preform is heated to temperatures in Region A of Fig. 2, so that very little densification occurs. The dehydrating agents can therefore flow freely through the preform pores.

Following the dry phase, the coil moves to the bottom of the furnace where it enters the sinter phase during which time the furnace temperature is elevated to temperatures within Region C of Fig. 2. The furnace hot zone is traversed upwardly by slowly driving the coil upwardly along the preform. An isothermal furnace condition is not sought during the sinter phase; rather, the temperature of each individual element of the preform increases and decreases with the approach and passing of the coil, respectively. The coil position is held constant for a period of time before and after the up-drive to complete the sintering of the tip and the top portions of the preform, respectively. Preforms can be driven further into the furnace during top hold to assist sintering. During the sinter phase, the preform reaches 100% density and becomes fully clarified.

When a preform is consolidated by the process disclosed in the Lane et al. patent, outgassing can occur regardless of whether the outer surface of the preform consolidates before the interior portion of the preform. The outgassing can occur from the interior of the section which is being consolidated into the adjacent unconsolidated portion. If outgassing did not occur, trapped gas could form bubbles that could adversely affect subsequent processing steps such as fiber drawing.

The method disclosed in the Lane et al. patent, while producing high quality consolidated preforms, has proven to be time consuming. For example, a porous preform weighing 10 kg would take approximately 6.25 hours to consolidate using this method. The sintering time cannot be reduced by merely scanning the coil along the preform at a faster rate. If the coil is scanned at too fast a rate, the preform may incompletely consolidate, thereby resulting in substantial losses of fiber due to processing problems during the subsequent fiber drawing operation. A second problem which can occur is higher optical losses in the drawn fiber due to either incomplete consolidation or defect sites formed in the consolidated preform due to the increased consolidation rate.

Attempts to overcome these problems by increasing coil power and/or coil size can also produce detrimental results. There is some maximum temperature to which the equipment can be subjected. For example, the silica muffle sags at temperatures above about 1525°C. Also, if the preform is subjected to too high a temperature, the outside surface can consolidate before the inside consolidates. When the inside consolidates, in may not have the required energy to pull the consolidated outer portion inwardly; this causes the inner region to be pulled from the solid glass core cane.

### Summary of the Invention

In view of the foregoing state of the art, it is an object of the present invention to provide a method for consolidating porous optical fiber preforms at high production rates.

The present invention relates to a method for drying and sintering a porous glass optical waveguide preform (11) comprising the steps of:
(a) drying the preform by heating it in the presence of a dehydrating agent to a first temperature or range of temperatures sufficient to substantially dry the preform,
(b) isothermally heating the preform to a pre-sintering temperature that is higher than the first temperature but lower than that temperature which would cause the preform to densify, whereby the isothermal heating is such that the furnace temperature along the axis of the preform does not vary more than about 50°C throughout the length of the preform;
(c) subjecting one end of the preform to a hot zone, the temperature of which is sufficient to densify and clarify the one end; and
(d) moving the hot zone toward the end of the preform remote from the one end whereby the temperature of each individual axial element of the preform increases and decreases with the approach and passing of the hot zone, respectively.

### Brief Description of the Drawings

Fig. 1 is schmetic illustration of a scanning consolidation furnace.
Fig. 2 is a densification curve for a silica-based porous preform.
Fig. 3 diagrammatically illustrates the use of a scanning consolidation furnace in the performance of the method of the invention.

### Detailed Description

The method of the present invention was developed to provide an increase in the rate of consolidation of porous glass preforms without affecting the quality of the resultant sintered draw blank or the optical fiber drawn therefrom. This method is an improvement over the method disclosed in the Lane et al. patent. The present method employs an isothermal pre-sinter phase in addition to the isothermal drying phase and the scan-type sinter phase disclosed in the Lane et al. patent. Because of the pre-sinter phase, the scan-sinter phase can be performed at a markedly increased rate.

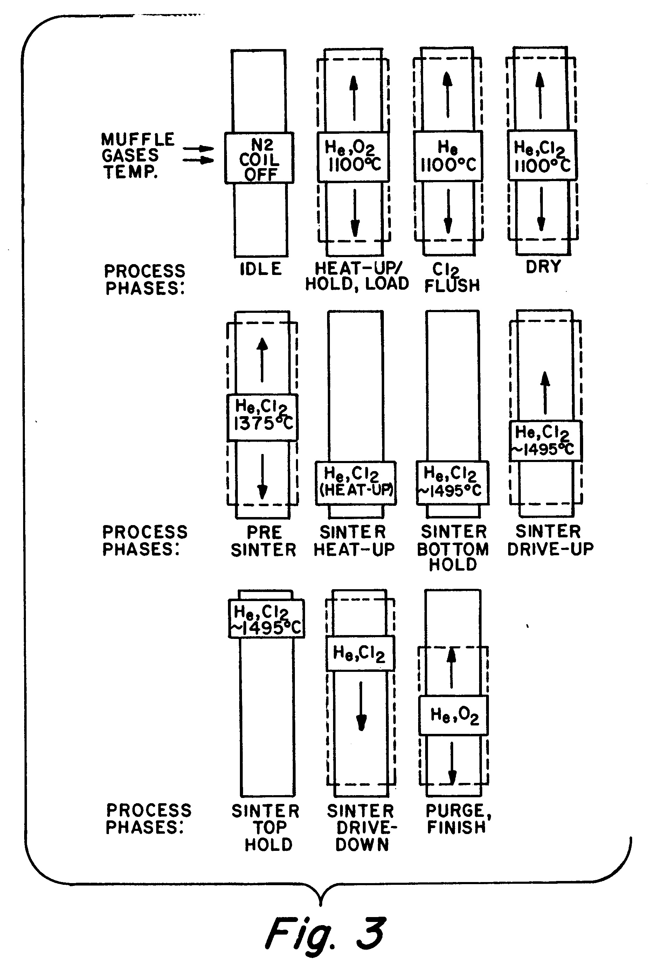

Fig. 3 diagrammatically illustrates a preferred sequence of operations for drying and sintering porous glass preforms using the furnace of Fig. 1 in accordance with the method of this invention. In Fig. 3, the long rectangular box symbolizes furnace 10 and the small rectangular box symbolizes moving induction heating coil 15.

The "idle" phase shown in the first panel of Fig. 3 represents the state of the furnace during a partial or total shutdown. Coil power is off and end heater power is set to produce a temperature in the range of, for example, 1000°C to 1150°C, in the vicinity of thermocouples 23 and 24. The region surrounding susceptor 14 is purged with argon. Similarly, the feed lines (not shown) for bringing processing gases, e.g., chlorine, to the furnace are purged with nitrogen.

To bring the furnace up to processing temperature, power is supplied to coil 15 during the "heat-up/hold" phase shown in panel 2 of Fig. 3. During this phase, the coil oscillates over the total length of the furnace at a rate of, for example, 1900 millimeters/minute when moving upward, and a rate of, for example 1900 millimeters/minute when moving downward. The power applied to the coil and end heaters is sufficient to isothermally heat the furnace to a temperature in the range of about 900°C to 1300°C, the temperature range of 1100°C to 1200°C being preferred. During this phase, a mixture of helium and oxygen is supplied to chamber 13 (arrow 17 of Fig. 1). The heat-up process is continued until the desired holding temperature of the furnace is achieved. The furnace is then ready to dry and consolidate a glass preform.

After the "heat-up/hold" phase has been completed, the "load" phase can be entered wherein preform 11 is lowered into chamber 13. During the "load" phase, furnace 10 continues to operate as in the "heat-up/hold" phase, the temperature being in the range of about 900°C to 1300°C.

After the preform has been loaded, the "Cl₂ flush" phase is entered wherein the nitrogen gas in the feed lines (not shown) leading to the bottom of the muffle is replaced with chlorine gas. This replacement can typically take about 1 minute. During this phase, the flow of oxygen is stopped, so that at the end of the phase, the processing gases entering chamber 22 are helium and chlorine.

After the "Cl₂ flush" phase, the furnace enters the "dry" phase during which the OH ions are eliminated from the preform prior to sintering. Throughout this phase, chamber 22 is filled with a mixture of helium and chlorine gas, and coil 15 oscillates over the full length of the furnace at a rate of, for example, 1900 millimeters/minute when moving upward and a rate of, for example 1900 millimeters/minute when moving downward. The rate of drying is determined by the combined effects of the temperature at which the dehydration is performed and the composition (i.e., dehydrating agents) of the atmosphere to which the preform is exposed. Higher concentrations of dehydrating agents generally result in more complete drying. Drying temperatures in the range of about 900 to 1300 °C have been found to be effective, with temperatures of about 1100-1200°C being preferred because such temperatures promote the activity of the dehydrating agent(s) while minimizing interparticle growth within the preform. The temperature can be held constant for a period of up to about 30 minutes during the "dry" phase, or it can immediately begin to ramp to the pre-sinter temperature. It is preferred that the temperature be held constant for some period of time during this phase.

After the "dry" phase has been completed, the furnace enters a second isothermal phase, the "pre-sinter" phase, during which the coil continues to oscillate along the length of the muffle. This is in contrast to the "one-phase" sintering process of the Lane et al. patent which uses an isothermal condition at drying temperatures only. By isothermally increasing the furnace temperature to just below the Region B temperature of Fig. 2, the entire preform is preheated and, ultimately, the time subsequently required at sintering temperatures is markedly reduced. Pre-sinter temperature can be in the range of about 1300°C to about 1400°C, depending on the time during which the preform is held in this temperature range. The pre-sinter temperature must be below that temperature at which rapid densification of the porous preform can occur. A pre-sinter temperature of about 1375°C is preferred.

Following the isothermal pre-sinter phase, the furnace enters the "sinter" phase which is similar to the sinter phase in the one-pass sintering process disclosed in the Lane et al. patent. The "sinter" phase includes a "heat-up" phase, a "bottom hold" phase, a "drive-up" phase, a "top hold" phase, and a "drive-down" phase (see Fig. 3).

Coil 15 is located at the bottom of the furnace during the "heat-up" phase, and power is supplied to the coil until the pyrometers measure a susceptor temperature of, for example, about 1400°C. During the "bottom hold" phase, the coil remains stationary and sinters the bottom tip of the preform, and the temperature at the bottom of the furnace reaches Range C of Fig. 2. A preferred temperature during this phase is approximately 1495°C; however any temperature within the range of 1450°C to 1520°C would be suitable for this phase. Next, during the "drive-up" phase, the coil moves upward at a rate which is as fast as possible without leaving any of the porous preform unclarified. The hot zone created by the coil progressively heats portions of chamber 22 above the sintering temperature of the preform. Because of the effectiveness of preheating the preform at a temperature above drying temperature but below sinter/clarification temperature, coil speeds greater than twice those used in one-pass sintering are possible. Thereafter, during the "top hold" phase, the top of the preform is sintered. Finally, the furnace enters the "drive-down" phase during which coil 15 moves to the bottom of the furnace at a rate of, for example, 2300 mm/minute. During this phase, the set point for the pyrometers can be, for example, approximately 1100°C. Throughout each of these phases, chamber 13 is filled with a mixture of helium and chlorine, and preform 11 is rotated by a spindle drive (not shown) at a rate of, for example, 7 rpm as illustrated by arrow 26. The pressure in muffle 24 during sintering is on the order of 0.01 to 0.2 inches of water above atmospheric pressure.

After sintering has been completed, the furnace enters the "purge" phase during which the coil oscillates over the lower portion of the furnace to reheat this area. The flow of chlorine gas into chamber 13 is turned off, and the chamber is purged with a mixture of helium and oxygen for a period of, for example 5 minutes. Once the chlorine gas has been purged, the furnace enters the "finish" phase during which the consolidated preform is removed from chamber 13. The coil continues to oscillate over the lower portion of the furnace for a period of, for example, 15 minutes during which the lower portion is heated to approximately 1100°C and the upper portion cools to approximately the same temperature. The furnace then returns to the "heat-up/hold" phase to await drying and consolidation of the next preform.

The following example is illustrative of the present invention. A soot preform was made using standard OVD deposition techniques as described in U.S. patent No. 4,486,212. This soot preform was dried and sintered in a conventional manner. The preform was then drawn into glass canes. An overclad soot preform was then made using a glass cane as a starting member and using standard OVD deposition techniques. The resultant hybrid porous preform weighed 10 kg.

The overclad soot preform was then dried and sintered using the method of the present invention. The following phases were performed as described above: idle; heat-up/hold, load; chlorine flush and dry. The maximum furnace temperature during the last three of those phases was about 1200°C; the preform was held at 1200°C for a time of about 40 minutes during the dry phase. The atmosphere to which the overclad preform was exposed was a flowing atmosphere containing 0.4 slpm Cl₂ and 40 slpm He. These flow rates were maintained throughout the consolidation process.

After the "dry" phase, the furnace entered the "pre-sinter" phase during which it was isothermally ramped over the next 20 minutes to a temperature of 1375°C. After a 30 minute hold at 1375°C, the furnace entered the "sinter heat-up" phase and continued through the "sinter bottom hold", "sinter drive-up", "sinter top hold", "sinter drive-down" and "purge", "finish" phases as described above. During all of the sinter phases, the maximum furnace temperature was 1495°C. During the "sinter drive-up" phase, the coil moved upward at a maximum rate of 25 mm/minute. No visual defects such as bubbles could be seen in the resultant consolidated draw blank which was then drawn into optical fiber which was suitable for commercial use.

Because of the difference in the temperature of the preform before and after the sequential heating is relatively small, the rate at which the preform is sequentially heated can be much higher than the sequential heating rate of prior methods. The consolidation process time for this example was 4.5 hours. The consolidation process time for a preform of identical size, when consolidated in accordance with the one pass sinter method of the Lane et al. patent, was 6.25 hours. Although specific embodiments of the invention have been described and illustrated, it is to be understood that modifications can be made without departing from the spirit and scope of the invention. For example, preforms other than the described hybrid porous preform can be consolidated in accordance with the method of the present invention. The preform need not have a solid glass core cane along its axis. Rather, it could consist entirely of soot. Also, a furnace having a plurality of axial hot zones could be employed. Rather than scanning a coil along the preform, the lowest zone of the furnace could initially be made the hottest; thereafter, the next higher zone could be raised to consolidation temperature, while the zone that had been at consolidation temperature would now decrease in temperature. This process would cause the furnace hot zone to scan upwardly along the preform.

## Claims

1. A method for drying and sintering a porous glass optical waveguide preform (11), comprising the steps of:
(a) drying said preform by heating it in the presence of a dehydrating agent to a first temperature or range of temperatures sufficient to substantially dry the preform,
(b) isothermally heating said preform to a pre-sintering temperature that is higher than said first temperature but lower than that temperature which would cause said preform to densify, whereby the isothermal heating is such that the furnace temperature along the axis of the preform does not vary more than about 50°C throughout the length of the preform;
(c) subjecting one end of said preform to a hot zone, the temperature of which is sufficient to densify and clarify said one end; and
(d) moving said hot zone toward the end of said preform remote from said one end whereby the temperature of each individual axial element of the preform increases and decreases with the approach and passing of said hot zone, respectively.

2. The method of claim 1 wherein said step of drying is performed while said preform (11) is isothermally heated.

3. The method of claim 2 wherein the step of drying is performed at a temperature in the range of 900-1300°C.

4. The method of claim 1, 2 or 3 wherein the steps of subjecting one end of said preform (11) to a hot zone and moving said hot zone comprise inserting said preform into a furnace (10) having a cylindrical susceptor (14), an electrical coil (15) surrounding a portion of said susceptor, and moving said coil along said susceptor.

5. The method of claim 4 wherein the step of isothermally heating said preform (11) comprises repeatedly traversing said coil (15) up and down along said susceptor (14).

6. The method of any of the preceding claims wherein the step of isothermally heating said preform (11) to a pre-sintering temperature comprises heating said preform to a temperature in the range of 1300°C to 1400°C.

7. The method of any of the preceeding claims wherein said hot zone is at a temperature 1450°C or more.

## Patentansprüche

1. Verfahren zum Trocknen und Sintern einer Vorform (11) für einen optischen Wellenleiter aus porösem Glas, welches folgende Schritte aufweist:
(a) Trocknen der Vorform durch Erwärmen derselben in Gegenwart eines dehydrierenden Wirkstoffes auf eine erste Temperatur oder einen Bereich von Temperaturen, welcher geeignet ist, die Vorform im wesentlichen zu trocknen,
(b) isothermes Erwärmen der Vorform auf eine Vorsinter-Temperatur, welche höher als die erste Temperatur ist, aber niedriger als die Temperatur, welche eine Verdichtung der Vorform verursachen wurde, wobei das isotherme Erwärmen derart gestaltet wird, daß die Ofentemperatur entlang der Achse der Vorform nicht mehr als etwa 50° C über die Länge der Vorform variiert;
(c) Aussetzen eines Endes der Vorform einer Heißzone, deren Temperatur zum Verdichten und Klarmachen des einen Endes geeignet ist; und
(d) Bewegen der Heißzone zum Ende der Vorform, welches von dem einen Ende entfernt ist, wodurch die Temperaturjedes individuellen Axialelements der Vorform mit dem Annahem und Durchlaufen der Heißzone jeweils zunimmt und abnimmt.

2. Verfahren nach Anspruch 1, dadurch gekennzeichnet, daß der Schritt des Trocknens durchgeführt wird, wahrend die Vorform (11) isotherm erwärmt wird.

3. Verfahren nach Anspruch 2, dadurch gekennzeichnet, daß der Schritt des Trocknens bei der Temperatur im Bereich von 900-1300° C durchgeführt wird.

4. Verfahren nach Anspruch 1, 2 oder 3, dadurch gekennzeichnet, daß die Schritte des Aussetzens des einen Endes der Vorform (11) der Heißzone und des Bewegens der Heißzone das Einsetzen der Vorform in einen Ofen (10) umfassen, welcher eine zylindrische Aufnahmeeinrichtung (14) hat, sowie eine elektrische Spule (15), die einen Abschnitt der Aufnahmeeinrichtung umgibt, sowie Bewegen der Spule entlang der Aufnahmeeinrichtung.

5. Verfahren nach Anspruch 4, dadurch gekennzeichnet, daß der Schritt des isothermen Erwärmens der Vorform (11) das wiederholte Traversieren der Spule (15) nach oben und unten entlang der Aufnahmeeinrichtung (14) umfaßt.

6. Verfahren nach einem der vorhergehenden Ansprüche, dadurch gekennzeichnet, daß der Schritt des isothermen Erwärmens der Vorform (11) auf eine VorsinterTemperatur das Erwärmen der Vorform auf eine Temperatur im Bereich von 1300° C bis 1400° C umfaßt.

7. Verfahren nach einem der vorhergehenden Ansprüche, dadurch gekennzeichnet, daß die Heißzone aufeiner Temperatur von 1450° C oder mehr ist.

## Revendications

1. Un procédé pour sécher et fritter une préforme de guide d'ondes optique en verre poreux (11), comprenant les opérations consistant :
(a) à sécher ladite préforme en la chauffant en présence d'un agent déshydratant à une première temperature ou plage de températures suffisante pour sécher substantiellement la préforme,
(b) à chauffer isothermiquement ladite préforme à une température de préfrittage supérieure à ladite première température mais inférieure à la température qui provoquerait une densification de ladite préforme, le chauffage isotherme étant tel que la température de four le long de l'axe de la préforme ne varie pas de plus d'environ 50 °C sur toute la longueur de la préforme,
(c) à exposer l'une première des extrémités de la préforme à une zone chaude dont la température est suffisante pour densifier et clarifier ladite première extrémité; et
(d) à déplacer ladite zone chaude en direction de l'extrémité de ladite préforme opposée à ladite première extrémité de sorte que la température de chaque élément axial individuel de la préforme augmente lorsque ladite zone chaude s'en approche et diminue lorsqu'elle s'en éloigne.

2. Le procédé de la revendication 1, dans lequel ladite opération de séchage est exécutée pendant le chauffage isotherme de ladite préforme (11).

3. Le procédé de la revendication 2, dans lequel l'opération de séchage est exécutée à une température de 900 à 1300 °C.

4. Le procédé de la revendication 1, 2 ou 3, dans lequel les opérations d'exposition de l'une des extrémités de ladite préforme (11) à une zone chaude et de déplacement de ladite zone chaude comprennent l'introduction de ladite préforme dans un four (10) comportant un suscepteur cylindrique (14), unbobinage électrique (15) entourant une portion dudit suscepteur, et le déplacement dudit bobinage le long dudit suscepteur.

5. Le procédé de la revendication 4 dans lequel l'opération de chauffage isotherme de ladite préforme (11) comprend un parcours montant et descendant répété dudit bobinage (15) le long dudit suscepteur (14).

6. Le procédé de l'une quelconque des revendications précédentes, dans lequel l'opération de chauffage isotherme de ladite préforme (11) à une température de préfrittage comprend un chauffage de ladite préforme à une température se situant dans l'intervalle de 1300 à 1400 °C.

7. Le procédé de l'une quelconque des revendications précédentes, dans lequel ladite zone chaude est à une température de 1450 °C ou plus.
